# EUROPÄISCHE PATENTSCHRIFT

(11) **EP 2 819 901 B1**
(45) Veröffentlichungstag und Bekanntmachung des Hinweises auf die Patenterteilung: **08.11.2017**
(21) Anmeldenummer: 13707831.7
(22) Anmeldetag: 26.02.2013
(51) Int. Cl.: B60W 40/105

(54) **VERFAHREN UND VORRICHTUNG ZUR ERMITTLUNG DER GESCHWINDIGKEIT UND/ODER POSITION EINES FAHRZEUGES**
METHOD AND DEVICE FOR DETERMINING THE SPEED AND/OR POSITION OF A VEHICLE
PROCÉDÉ ET DISPOSITIF DE DÉTERMINATION DE LA VITESSE ET/OU DE LA POSITION D'UN VÉHICULE

(30) Priorität: 28.02.2012 DE 102012203037
(43) Veröffentlichungstag der Anmeldung: 07.01.2015
(73) Patentinhaber: Continental Automotive GmbH, 30165 Hannover (DE)
(72) Erfinder: HOHM, Andree, 63785 Obernburg (DE); KOMAR, Matthias, 60433 Frankfurt am Main (DE); STÄHLIN, Ulrich, 65760 Eschborn (DE)
(86) Internationale Anmeldenummer: PCT/EP2013/053760
(87) Internationale Veröffentlichungsnummer: WO 2013/127757

(56) Entgegenhaltungen:
- DE-A1- 10 028 130
- DE-A1-102008 026 274
- DE-A1-102010 007 262
- JP-A- 2006 163 615

## Beschreibung

Die Erfindung betrifft ein Verfahren zur Ermittlung der Geschwindigkeit eines Fahrzeugs, das mit wenigstens einem Umfeldsensor ausgestattet ist, der Umfelddaten des Fahrzeugs relativ zu wenigstens einem nicht-bewegten Objekt ermittelt, sowie eine Vorrichtung zur Durchführung dieses Verfahrens.

Umfeldsensoren sind als Erfassungseinrichtung zu verstehen, die das Umfeld des Fahrzeugs durch Messungen erfassen und abbilden. Die durch den Umfeldsensor ausgegebenen Umfelddaten beschreiben durch die Messungen erfasste Objekte relativ zu dem eigenen Fahrzeug. Daher enthalten die Umfelddaten insbesondere eine Angabe über einen relativen Abstand zwischen dem Fahrzeug und dem erfassten Objekt, gegebenenfalls auch in Form eines gerichteten relativen Abstands bezogen auf eine durch das Fahrzeug definierte Vorzugsrichtung. Die aus den Messungen abgeleiteten Umfelddaten können also die relative Distanz zu dem Fahrzeug, die Radialgeschwindigkeit und der Winkel zwischen dem Fahrzeug und dem nicht-bewegten Objekt oder sonstige aus dem Messungen abgeleitete Parameter sein, die den Ort des Objekts relativ zu dem Fahrzeug charakterisieren.

Zur Bestimmung der Geschwindigkeit des eigenen Fahrzeugs ist es bereits bekannt, die aktuelle Geschwindigkeit aus Messungen von Fahrdynamiksensoren in dem Fahrzeug abzuschätzen. Die bei derartigen Ansätzen verwendeten Sensoren messen beispielsweise die Raddrehzahl, Gierrate, Querbeschleunigung, Lenkbeschleunigung oder den Lenkradwinkel und arbeiten autonom. Alternativ kann die Geschwindigkeit des Fahrzeugs auch anhand von Positionsinformationen ermittelt werden, die mit einem vorzugsweise statellitenbasierten Navigationssystem wie Galileo, Glonass oder GPS bestimmt wurden.

Ebenso ist es bekannt, das Umfeld eines Fahrzeuges mit entsprechenden Sensoren zu überwachen. In der US 2010/0017128 A1 wird ein System zur Abschätzung der Fahrzeugdynamik vorgeschlagen. Bei diesem System erfassen dafür in dem Fahrzeug vorgesehene Umgebungssensoren wie Radar-, Lidar- oder Kamerasensoren ein stationäres Objekt in der Fahrzeugumgebung und verfolgen seine Bewegung. Aus diesen Daten werden dann die Geschwindigkeit und die Position des Fahrzeugs abgeschätzt, wobei zusätzlich Fahrzeugs-Bewegungssensoren wie Beschleunigungssensoren oder Raddrehsensoren eingesetzt werden können. Position und Geschwindigkeit des Fahrzeugs können jedoch nur relativ zu dem jeweils betrachteten stationären Objekt abgeschätzt werden.

Die WO 2006/063546 A1 beschreibt ein Verfahren und eine Vorrichtung zur Ermittlung der Fahrzeuggeschwindigkeit aus wenigstens zwei Bildern, die durch eine Kamera des Fahrzeugs zeitlich sukzessive aufgenommen wurden. Die Änderung der Position und/oder der Größe eines in den Bildern enthaltenen Objekts wird dabei ausgewertet. Hieraus wird die Geschwindigkeit des Fahrzeugs bezogen auf das Objekt bestimmt. Bei dem Objekt kann es sich beispielsweise um einen Teil der Fahrbahnmarkierung handeln.

In der US 2006/0020389 A1 wird ein System zur Erzeugung digitaler Spurmarkierungen zur Anzeige der Fahrbahn eines Fahrzeugs beschrieben, das eine Kamera, einen GPS-Koordinatenempfänger und einen Gyro-Sensor aufweist. Diese Daten werden kombiniert, um die genaue Position des Fahrzeugs auf einer Fahrspur festzustellen.

Aus der DE 10 2008 026 274 A1 ist ein Verfahren zur Bestimmung der Relativposition zwischen einem Egoobjekt und einem Zielobjekt zur Anwendung bei bewegten Fahrzeugen bekannt. Bei dem bekannten Verfahren werden eine autonome Zielposition des bewegten Zielobjekts und, mittels einer von dem bewegten Zielobjekt ausgesendete Positionsinformation, eine kooperative Relativposition des bewegten Zielobjekts bestimmt. Die autonome und die kooperative Relativposition werden anschließend zu einer Relativposition fusioniert.

Aufgrund der Bestimmung der Position und/oder Geschwindigkeit des Fahrzeugs zu den mittels Sensoren aufgenommenen Objekten in der Fahrzeugumgebung sind die ermittelten Werte nur relativ zu den Fahrzeugen bekannt und außerdem fehlerbehaftet. Zusätzlich dauert die Bestimmung der Werte vergleichsweise lange, da ein Tracking der Objekte vorgenommen und anschließend ausgewertet werden muss. Ferner stehen Satellitendaten zur Positionsbestimmung der bewegten Objekte, gerade in städtischen Umgebungen mit hohen Häuserschluchten, häufig nicht zuverlässig zur Verfügung, so dass eine Bestimmung insbesondere des Positionswertes schwierig und mit einem großen Fehler behaftet ist.

Aufgabe der Erfindung ist es daher, die Position und/oder Geschwindigkeit des Eigenfahrzeugs einfacher und zuverlässiger abzuschätzen.

Diese Aufgabe wird erfindungsgemäß mit dem Verfahren des Anspruchs 1 und der entsprechend eingerichteten Vorrichtung gemäß Anspruch 9 gelöst.

Dazu wird vorgeschlagen, dass das wenigstens eine nicht-bewegte Objekt und das Fahrzeug an der drahtlosen Fahrzeug-zu-Umgebung-Kommunikation teilnehmen, und dass zumindest das nicht-bewegte Objekt eine Information über seine Nichtbewegung aussendet. Dabei handelt es sich beispielsweise um die Geschwindigkeitsinformationen, die im Rahmen der standardisierten Fahrzeug-zu-Umgebung-Kommunikation von dem Objekt ausgesendet wird. Alternativ kann der Bewegungsstatus aus der übertragenen Art des Objekts ermittelt werden. Handelt es sich beispielsweise um eine Ampel, ein Informationsschild oder um eine Road-Side-Unit, so folgt daraus zwangsläufig, dass sich das Objekt nicht bewegt. Diese Information wird von dem Fahrzeug empfangen, vorzugsweise über für die Fahrzeug-zu-Umgebung-Kommunikation eingerichtete Antenne. Daraufhin wird aus den zuvor erfassten Umfelddaten des Fahrzeugs zu dem nicht-bewegten Objekt die relative Bewegung des Fahrzeugs zu dem nicht-bewegten Objekt und daraus die Geschwindigkeit des Fahrzeugs ermittelt. Zusätzlich oder alternativ kann auch die relative Position des Fahrzeugs zu dem nicht-bewegten Objekt ermittelt werden.

Bei den Umfelddaten handelt es sich beispielsweise um die relative Distanz, die Radialgeschwindigkeit und den Winkel zwischen dem Fahrzeug und dem nicht-bewegten Objekt. Damit die relative Bewegung, also die Veränderung der Position mit der Zeit, ermittelt werden kann, können Messungen zu wenigstens zwei unterschiedlichen Zeiten durchgeführt werden. Anhand der Winkelinformation kann die Bewegung in einem relativen Koordinatensystem zwischen dem Objekt und dem Fahrzeug dargestellt werden. Aus der relativen Bewegung, die zu zwei unterschiedlichen Zeiten gemessen wurden, lässt sich dann die Differenz der Positionswerte ermitteln, auch ohne explizite Kenntnis der Positionswerte in einem definierten Koordinatensystem. Daraus ergibt sich, in Verbindung mit dem Zeitintervall zwischen den Messungen, die Geschwindigkeit. Die Geschwindigkeit liegt daraufhin betragsmäßig und relativ zu dem nicht-bewegten Objekt vor. Da bekannt ist, dass das Objekt sich nicht bewegt, dass es also steht, ist die relativ zu dem Objekt gemessene Geschwindigkeit betragsmäßig gleich der absoluten Geschwindigkeit. Sofern mehrere Werte beispielsweise durch eine kontinuierliche Messung erfasst werden, lässt sich die Trajektorie der Position über der Zeit bestimmen. Daraus ergibt sich die Geschwindigkeit zu einem bestimmten Zeitpunkt durch eine Ableitung nach der Zeit. Sofern beispielsweise Größenangaben des erfassten Objekts bekannt sind, beispielsweise weil sie in der über die drahtlose Fahrzeug-zu-Umgebung-Kommunikation empfangenen Information enthalten sind oder aus dieser abgeleitet werden können, lässt sich gegebenenfalls über Triangulationsmethoden auch die Position des Fahrzeugs relativ zu dem Objekt abschätzen. Die Genauigkeit der Schätzung wird - sowohl für die Geschwindigkeit als auch die Position - dadurch verbessert, dass aus der Fahrzeug-zu-Umgebung-Kommunikation als zusätzliche Information zu dem Objekt bekannt ist, dass es sich um ein nicht-bewegtes Objekt handelt und daher aus einer Bewegung des Objekts stammende Schätzungsfehler nicht auftreten. Ermöglicht ein Umfeldsensor eine direkte Messung der Relativgeschwindigkeit, so entfallen die beschriebenen Ableitungen der Geschwindigkeit aus Abstandsinformationen. Beispiele für solche Sensoren sind Radarsensoren.

In Weiterbildung des erfindungsgemäßen Gedankens kann vorgesehen sein, dass das nicht-bewegte Objekt auch eine Information über seine Position aussendet, die von dem Fahrzeug empfangen wird, und das aus den Umfelddaten des Fahrzeugs zu dem nicht-bewegten Objekt und aus der Information über die Position des nicht-bewegten Objekts die (absolute) Position des Fahrzeugs ermittelt wird.

Die Positionsinformation des nicht-bewegten Objektes wird insbesondere in einem absoluten Koordinatensystem, beispielsweise durch die Angabe des Längen- und Breitengrades, ausgesandt. Anhand dieser Information kann die aus den Umfelddaten ermittelte relative Position und Lage zwischen dem Fahrzeug und dem Objekt, die beispielsweise als X- und Y-Koordinate in einem relativen Koordinatensystem vorliegen, durch eine Koordinatentransformation in ein absolutes Koordinatensystem als Längen- und Breitengrad umgerechnet werden. Weil das nicht-bewegte Objekt ruht, ist dessen Position üblicherweise genauer bekannt als die eines bewegten Objektes. Dies ist begründet in der Art der Messung, beispielsweise bei einer Ortung durch ein globales Navigationssystem, die bei bewegten Objekten einen größeren Fehler aufweist. Außerdem können bei einem stationären Objekt mehrere gemessene Positionswerte gemittelt werden. Ferner kann die Position eines nicht-bewegten Objektes auch anderweitig bekannt sein, beispielsweise durch eine sehr genaue Messung bei der Errichtung des Objektes, wie zum Beispiel einer Ampel.

Durch das erfindungsgemäße Verfahren wird die Bestimmung der absoluten Position eines bewegten Objektes in einem absoluten Koordinatensystem daher in zwei Teile aufgeteilt. In dem ersten Teil wird die Position des Fahrzeuges relativ zu einem ruhenden Objekt mittels eines in dem Fahrzeug autonom arbeitenden Umfeldsensors ermittelt. In dem zweiten Teil wird diese relative Position in ein absolutes Koordinatensystem eingeordnet. Da die absolute Positionsbestimmung in einem ruhenden Objekt mit größerer Genauigkeit durchgeführt werden kann als in einem bewegten Objekt, erlaubt das vorliegende Verfahren eine genauere Ermittlung der absoluten Position als das bisher möglich war. Ferner ist das Verfahren auch weniger fehleranfällig, da die absolute Positionsbestimmung nur einmal durchgeführt werden muss. So können Fehler reduziert werden, die beispielsweise darauf zurückzuführen sind, dass die Bestimmung der Position mittels Satellitennavigation eine freie Sichtverbindung zu dem Satelliten erfordert. Dies kann im städtischen Verkehr aufgrund der umgebenden Gebäude oder bei einem bedeckten Himmel erschwert sein und daher zeitlich gesehen länger dauern oder zu Ungenauigkeiten führen.

In Weiterentwicklung dieses Gedankens wird aus den Positionen des Fahrzeugs und des nicht-bewegten Objekts, sowie der relativen Bewegung des Fahrzeugs zu dem nicht-bewegten Objekt eine gerichtete Geschwindigkeit des Fahrzeugs ermittelt. Dabei wird die Geschwindigkeit nach Betrag und Richtung in dem Koordinatensystem bestimmt, in dem die Positionen von Fahrzeug und Objekt bekannt sind. Insbesondere ist die Geschwindigkeit somit in einem absoluten Koordinatensystem als Vektor darstellbar.

In einer bevorzugten Ausführungsform werden die Umfelddaten des Fahrzeugs zu mehreren nicht-bewegten Objekten ermittelt. Dazu werden insbesondere zwei, bevorzugt aber zwischen drei und fünf bis 20 nicht-bewegte Objekte verwendet. Zusätzlich senden alle nicht-bewegten Objekte eine Information über ihre Nichtbewegung aus, die von dem Fahrzeug empfangen wird. Im Anschluss werden aus den verschiedenen Umfelddaten des Fahrzeugs zu den mehreren nicht-bewegten Objekten die relative Bewegung des Fahrzeugs zu den nicht-bewegten Objekten und daraus die Geschwindigkeit des Fahrzeugs ermittelt.

Die so erhaltenen einzelnen Geschwindigkeiten werden zu einem einzelnen Geschwindigkeitswert des Fahrzeugs gemittelt, wobei gegebenenfalls die verschiedenen Bewegungsrichtungen berücksichtigt werden. Die Mittelung kann dabei als arithmetischer Mittelwert oder in Form eines gewichteten Mittelwertes bestimmt werden.

Wird der Mittelwert arithmetisch aus den einzelnen Messungen ermittelt, so werden die einzelnen Messungen in der Mittelung gleichwertig berücksichtigt. Alternativ dazu kann die Geschwindigkeit aus den mit einem Gewichtungsfaktor gewichteten einzelnen Messungen bestimmt werden. Die Gewichtung kann beispielsweise anhand des Abstandes zwischen dem Objekt und dem Fahrzeug erfolgen. Der Gewichtungsfaktor wird dann in Abhängigkeit von der Genauigkeit mit der die einzelnen Werte durch die Umfeldsensoren gemessen wurden gewählt. So wird beispielsweise die Geschwindigkeit eines Objektes im Fernbereich bei einigen Radarsensoren genauer gemessen als die eines Objektes im Nahbereich. Daher kann in diesem Fall vorgesehen sein, dass ein entferntes Objekt in die Mittelung mit einem höheren Gewichtungsfaktor eingeht als ein nahes Objekt. Hierdurch erfolgt die Ermittlung der Geschwindigkeit des Fahrzeugs mit einer deutlich höheren Genauigkeit. Ferner wird so die Fehleranfälligkeit der Geschwindigkeitsermittlung verringert, die beispielsweise durch eine fehlerhafte einzelne Messung hervorgerufen sein kann.

Auf einer darauf aufbauenden Ausführungsform ist es optional vorgesehen, dass die nicht-bewegten Objekte eine Information über ihre Position aussenden, die von dem Fahrzeug empfangen wird, und dass aus den Umfelddaten des Fahrzeugs zu den nicht-bewegten Objekten und aus den Informationen der Position der nicht-bewegten Objekte die Position des Fahrzeugs ermittelt wird. Hieraus kann nach dem oben beschriebenen Verfahren die Position des Fahrzeuges durch eine Mittelung der Einzelwert erfolgen. Bei der Mittelung kann ein gewichteter Mittelwert oder ein arithmetischer Mittelwert verwendet werden.

Bei der gewichteten Mittelung können die Genauigkeit mit der das Objekt seine Position bestimmt hat und/oder die Ausdehnung des Objektes in dem Gewichtungsfaktor berücksichtigt werden. Diese Informationen können neben der Positionsinformation im Rahmen der Fahrzeug-zu-Umgebung-Kommunikation ausgesandt werden. Dies erlaubt es, Objekte, die eine geringere Ausdehnung haben und/oder deren Position genauer bekannt sind, höher zu gewichten als die anderen Objekte. Dies führt zu einer erhöhten Genauigkeit, insbesondere bei der Positionsermittlung.

In Weiterentwicklung dieser Idee kann die Ermittlung der Geschwindigkeit und/oder der Position des Fahrzeugs unter Verwendung statistischer Methoden durchgeführt werden. Hierdurch ist es möglich, dass die Geschwindigkeit und die Position durch eine geeignete Wahl der statistischen Methode beispielsweise eine reduzierte Fehleranfälligkeit aufweist. Beispiele für statistische Methoden können dabei Erwartungswerte, Kalmanfilter (unter Verwendung von zeitlichen Verläufen der Messungen) oder dergleichen sein.

In einer weiter verbesserten Ausführungsform kann die ermittelte Position und/oder Geschwindigkeit des Fahrzeugs mit Positions- und Geschwindigkeitswerten aus fahrzeuginternen Sensoren fusioniert werden, insbesondere mit den Messwerten zur Fahrzeugdynamik. Bei den Fahrzeugdynamik-Sensoren, die dynamische Eigenschaften des Fahrzeuges messen, handelt es sich beispielsweise um Beschleunigungssensoren oder Gierratensensoren. Durch die Sensorfusion werden Daten unterschiedlicher Sensortechnologien kombiniert. Dadurch verbessert sich die Genauigkeit der gesamten Sensorik und Positions- bzw. Geschwindigkeitsschätzung. Idealerweise werden hierfür kalmanfilterbasierte Verfahren oder Partikelfilter oder ähnliche Technologien verwendet.

In Weiterentwicklung kann ferner vorgesehen sein, dass als Umfeldsensoren ein Radarsensor, ein Kamerasensor, ein Laserscanner, ein Lidar und/oder Ultraschallsensoren verwendet werden. Durch den Radarsensor kann beispielsweise in einer einzelnen Messung die Distanz zwischen den Objekten und dem Fahrzeug und bei entsprechender Winkelauflösung ebenso das Winkelverhältnis und die Radialgeschwindigkeit gemessen werden, woraus sich direkt die Relativgeschwindigkeit ermitteln lässt. Dazu wird ein Radarsignal von dem Radarsensor ausgesandt und nach der Reflexion an dem entfernten Objekt wieder aufgefangen. Daraus wird die Laufzeit des Radarsignales und somit die Entfernung zwischen dem Objekt und dem Fahrzeug ebenso wie der Winkel zwischen beiden ermittelt. Ferner kann durch eine Analyse der Frequenz des Radarsignals vor und nach dem Aussenden die Dopplerverschiebung des Radarsignals ermittelt werden, um die Bewegung des Fahrzeugs zu berücksichtigen. Anhand bekannter Verfahren, die daher nicht weiter erläutert zu werden brauchen, ergibt sich daraus direkt die Radialgeschwindigkeit zwischen dem Fahrzeug und dem Objekt.

Bei der Verwendung eines Kamerasensors als Umfeldsensor werden wenigstens zwei Bilder erfasst und die Positionsveränderung eines darauf sichtbaren Objektes mittels eines entsprechenden Verfahrens, beispielsweise eines Triangulationsverfahrens, bestimmt. Sofern die Größe zumindest einzelner Merkmale des Objekts bekannt ist, reicht auch eine einzige Aufnahme zur Positionsbestimmung aus. Dies liefert die Relativgeschwindigkeit sowie den Winkel zwischen dem Fahrzeug und dem Objekt.

Ferner betrifft die Erfindung eine Vorrichtung zur Ermittlung der Geschwindigkeit und/oder Position eines Fahrzeugs, wobei das Fahrzeug mit einer Kommunikationseinheit zur Teilnahme an einer drahtlosen Fahrzeug-zu-Umgebung-Kommunikation, mit wenigstens einem Umfeldsensor, der Umfelddaten des Fahrzeuges zu wenigstens einem nicht-bewegten Objekt ermittelt, und mit einer Recheneinheit ausgestattet ist. Die Recheneinheit ist zur Durchführung des vorbeschriebenen Verfahrens oder Teilen hiervon eingerichtet.

Weitere Vorteile, Merkmale und Anwendungsmöglichkeiten der vorliegenden Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen. Es zeigen:
- Fig. 1: schematisch eine Verkehrssituation an einer Kreuzung;
- Fig. 2: die Verkehrssituation aus Fig. 1 zu einem späteren Zeitpunkt;
- Fig. 3: schematisch eine andere Verkehrssituation auf einer geraden Fahrbahn und
- Fig. 4: ein Ablaufdiagramm für ein Ausführungsbeispiel des erfindungsgemäßen Verfahrens.

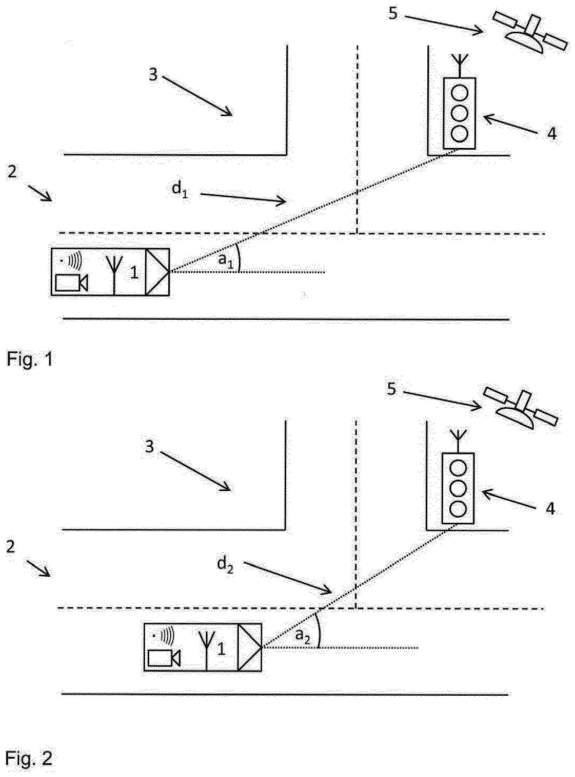

Fig. 1 zeigt ein Fahrzeug 1, das sich auf einer Fahrbahn 2 befindet. Es bewegt sich auf eine Kreuzung 3 zu, an der sich ein nicht-bewegtes Objekt 4 befindet. Bei dem nicht-bewegten Objekt 4 handelt es sich um eine Ampel, die stationär auf der dem Fahrzeug abgewandten Seite der Kreuzung 3 angeordnet ist.

Sowohl das Fahrzeug 1 als auch die Ampel 4 nehmen an der Fahrzeug-zu-Umgebung-Kommunikation teil. Im Rahmen der standardisierten Fahrzeug-zu-Umgebung-Kommunikation sendet die Ampel 4 Nachrichten aus. Diese Nachrichten beinhalten die Geschwindigkeit, Position und Ausdehnung der Ampel 4. Da es sich bei der Ampel 4 um ein stationäres Objekt handelt, ist die Geschwindigkeit gleich null. Das Fahrzeug 1 empfängt mit seiner Antenne diese Nachrichten. In der Recheneinheit des Fahrzeugs 1 wird diese Nachricht analysiert und festgestellt, dass sich ein nicht-bewegtes Objekt in der Umgebung befindet.

Daraufhin wird die Ampel 4 durch Umgebungssensoren des Fahrzeugs 1 erfasst. Bei den Umgebungssensoren handelt es sich um einen Radarsensor und um einen Kamerasensor. Der Radarsensor erfasst durch eine zeit-, winkel- und frequenzaufgelöste Messung die Distanz, den Winkel und die relative Geschwindigkeit zwischen dem Fahrzeug 1 und der Ampel 4. Parallel zu der Erfassung der Ampel 4 durch den Radarsensor wird die Ampel 4 auch von dem Kamerasensor erfasst. Die Kamera nimmt zu mindestens zwei verschiedenen Zeiten Bilder auf. Aus diesen Bildern kann durch Verfahren, die aus dem Stand der Technik bekannte sind, die Relativgeschwindigkeit und der Winkel zwischen den beiden Objekten ermittelt werden. In einer anschließenden Sensorfusion werden diese Werte zu einem einzelnen Geschwindigkeits- und Positionswert verbunden. Somit liefern die Umfeldsensoren die Distanz d₁, den Winkel a₁ und die Geschwindigkeit zwischen dem Fahrzeug 1 und der Ampel 4.

Diese Umfelddaten können in einem relativen Koordinatensystem dargestellt werden, dessen Ursprung beispielsweise mit der Position der Ampel übereinstimmt. Daher weist die Ampel 4 in dem relativen Koordinatensystem die Koordinaten (0,0) auf. Alternativ bietet sich als relatives Koordinatensystem auch das Koordinatensystem des Fahrzeugs 1 an.

Im Rahmen der Fahrzeug-zu-Umgebung-Kommunikation empfängt das Fahrzeug 1 die Positionsinformationen der Ampel 4 in einem globalen Koordinatensystem, beispielsweise als Längen- und Breitengrad. Ebenso empfängt das Fahrzeug 1 die Ausdehnung der Ampel 4. In der Ampel 4 kann die Positionsinformation durch ein Satellitenortungssystem erfasst werden, das dazu Daten von einem Satelliten 5 empfängt. Anhand der absoluten Position der Ampel 4 wird das relative Koordinatensystem durch eine einfache Koordinatentransformation in das absolute (globale) Koordinatensystem überführt. So werden die absolute Geschwindigkeit und die Fahrtrichtung ermittelt. Dann liegt die Geschwindigkeit als ein Vektor, und daher als gerichtete Geschwindigkeit, in einem bekannten globalen Koordinatensystem vor. Ebenso liegt die Positionsinformation des Fahrzeuges in diesem Koordinatensystem vor. Dabei wird die Ausdehnung der Ampel 4 als Fehler bei der Positionserfassung interpretiert.

Fig. 2 zeigt die Situation aus Fig. 1 zu einem späteren Zeitpunkt. Das Fahrzeug 1 hat sich bereits weiter auf die Kreuzung 3 und somit auch auf die Ampel 4 zubewegt. Dadurch hat sich der Abstand d₂ zwischen dem Fahrzeug 1 und der Ampel 4 verkürzt, während sich der Winkel a₂ zwischen dem Objekt 4 und dem Eigenfahrzeug 1 vergrößert hat.

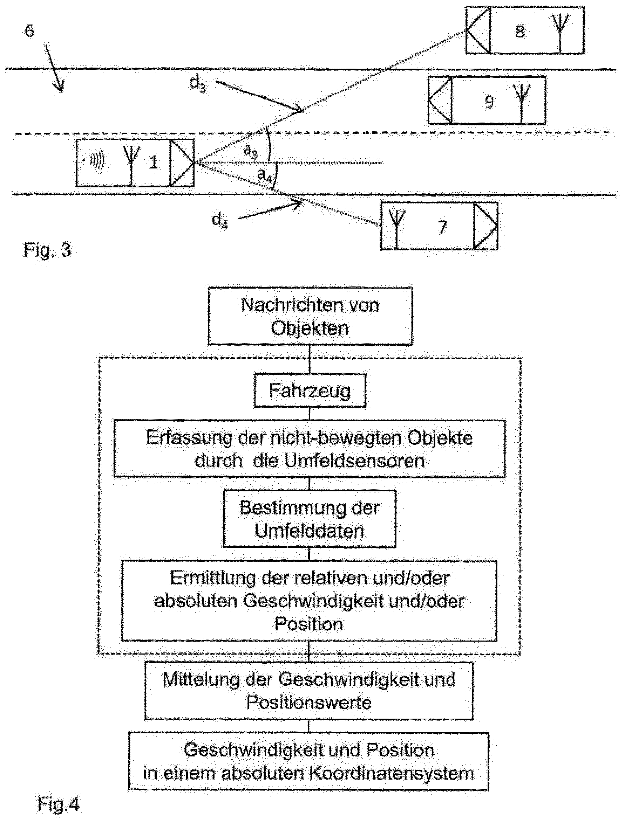

In Fig. 3 ist das Fahrzeug 1 auf einer zweispurigen geraden Fahrbahn 6 zu sehen. An den Straßenrändern der Fahrbahn 6 befinden sich jeweils in Fahrtrichtung geparkte, also nicht-bewegte Fahrzeuge 7 und 8. Es kann sich dabei auch um andere Objekte, wie Ampeln oder Road Side Units, handeln, solange sie ruhen und ihre Position im Rahmen der Fahrzeug-zu-Umgebung-Kommunikation aussenden. Das Fahrzeug 9 bewegt sich in entgegengesetzter Richtung zu dem Fahrzeug 1 auf einer gegenläufigen Spur der Fahrbahn 6.

Die Fahrzeuge 7, 8 und 9 senden beispielsweise DENM-Nachrichten ("Decentralized Environmental Notification Messages") im Rahmen der drahtlosen Fahrzeug-zu-Umgebung-Kommunikation aus. Diese Nachrichten beinhalten Angaben über die Position und Geschwindigkeit der Objekte 7, 8, 9 und werden von dem Fahrzeug 1 empfangen und verarbeitet. Dabei stellt eine Analyseeinrichtung einer fahrzeuginternen Recheneinheit fest, dass die Fahrzeuge 7 und 8 ruhen und dass sich das Fahrzeug 9 bewegt.

Die Fahrzeuge 7 und 8 werden auch durch die als Umfeldsensoren arbeitenden Radar- und Kamerasensoren des Fahrzeugs 1 erkannt und erfasst. Die Umfeldsensoren ermitteln die Umfelddaten zwischen dem Fahrzeug 1 und den nicht-bewegten Fahrzeugen 7, 8, also deren relative Geschwindigkeit, Distanz d₃, d₄ und Winkellage a₃, a₄ zueinander bzw. die relative Bewegung. Diese Daten werden jeweils in einem relativen Koordinatensystem als Positions- und Richtungswerte eingetragen. Der Ursprung des Koordinatensystems ist dabei immer so gewählt, dass das entsprechende nicht-bewegte Objekt im Ursprung liegt. Das Fahrzeug 9 wird nicht berücksichtigt, da es nicht ruht.

Anhand der Informationen aus der DENM-Botschaft wird dem Ursprung der relativen Koordinatensysteme ein neuer Wert zugeordnet, nämlich die absolute Position des entsprechenden Fahrzeuges 7, 8. So werden die relativen Koordinatensysteme in ein absolutes Koordinatensystem überführt, wodurch die Lage und Position des Fahrzeug 1 absolut dargestellt wird. Diese Ermittlung wird für jedes nicht-bewegte Objekt unabhängig durchgeführt wird. Somit liegen in dem Eigenfahrzeug 1 zwei unabhängige Sätze an Geschwindigkeits- und Positionswerten in einem absoluten Koordinatensystem vor. Diese Sätze werden in einem gewichteten Mittelwert berücksichtigt. Das Fahrzeug 7 befindet sich im Nahbereich des Radarsensors des Fahrzeuges 1, während sich das Fahrzeug 8 im Fernbereich befindet. Da die Genauigkeit des Radarsensors im Fernbereich besser ist, wird der Wertesatz, der auf Basis des Fahrzeuges 8 ermittelt wurde, bei der Mittelwertbildung höher gewichtet.

In einer Abwandlung dieses Ausführungsbeispiels gemäß Fig. 3 berücksichtigt das Fahrzeug 1 nur das parkende Fahrzeug 7, um die Geschwindigkeit und Position zu berechnen. Dies ist vorteilhaft, weil sich das Fahrzeug 8 auf dem Seitenstreifen gegenüber der Fahrspur des Fahrzeuges 1 befindet und eventuell durch den gegenläufigen Verkehr, der durch das Fahrzeug 9 symbolisiert ist, abgeschottet werden kann. Im Falle der Abschottung wäre eine Messung mit den Umfeldsensoren deutlich fehlerbehaftet bzw. vollständig nicht möglich.

Das zuvor beschriebene Verfahren wird nachfolgend mit Bezug auf Fig. 4 noch einmal zusammenfassend beschrieben. Im Rahmen des Verfahrens, das in einer beispielsweise durch eine entsprechend eingerichtete Recheneinheit ausgeführt werden kann, werden also durch das Fahrzeug 1 von den Objekten 4, 7, 8 und 9 empfangene Nachrichten ausgewertet. Nach der Analyse der darin enthaltenen Information und der Feststellung, dass sich die Objekte 4, 7 und 8 nicht bewegen, erfassen die Umfeldsensoren diese Objekte 4, 7, 8. Daraufhin werden deren Umfelddaten bestimmt. Aus den Umfelddaten werden die Position und Geschwindigkeit relativ zu dem nicht-bewegten Objekt durch geeignete Berechnung nach an sich bekannten Verfahren ermittelt. Zusammen mit den Informationen aus der Nachricht von dem nicht-bewegten Objekt 4, 7, 8 lässt sich daraus die absolute Geschwindigkeit und Position des Fahrzeugs bestimmen.

Sofern Nachrichten von mehreren Objekten 4, 7, 8 vorliegen, werden die obigen Verfahrensschritte jeweils für jedes Objekt 4, 7, 8 wiederholt. Die so erhaltenen, eventuell mehreren Sätze an Positions- und Geschwindigkeitswerten werden in einem nächsten Schritt gemittelt bzw. zusammengefasst. Dabei können je nach Situation unterschiedliche statistische Verfahren zur Mittelung angewandt werden.

Daraus folgen die Geschwindigkeit nach Betrag und Richtung sowie die Position in einem absoluten Koordinatensystem.

## Patentansprüche

1. Verfahren zur Ermittlung der Geschwindigkeit eines Fahrzeuges (1), das mit wenigstens einem Umfeldsensor ausgestattet ist, der Umfelddaten des Fahrzeuges (1) relativ zu wenigstens einem nicht-bewegten Objekt (4, 7, 8) ermittelt, wobei das wenigstens eine nicht-bewegte Objekt (4, 7, 8) und das Fahrzeug (1) an einer drahtlosen Fahrzeug-zu-Umgebung-Kommunikation teilnehmen und zumindest das nicht-bewegte Objekt (4, 7, 8) eine Information über seine Nicht-Bewegung aussendet, die von dem Fahrzeug (1) empfangen wird, und wobei aus den Umfelddaten des Fahrzeugs (1) zu dem nicht-bewegten Objekt (4, 7, 8) die relative Bewegung des Fahrzeugs (1) zu dem nicht-bewegten Objekt (4, 7, 8) und daraus die Geschwindigkeit des Fahrzeuges (1) und/oder die relative Position des Fahrzeugs (1) zu dem nicht-bewegten Objekt (4, 7, 8) ermittelt wird.

2. Verfahren nach Anspruch 1, **dadurch gekennzeichnet, dass** das nicht-bewegte Objekt (4, 7, 8) eine Information über seine Position aussendet, die von dem Fahrzeug (1) empfangen wird, und dass aus den Umfelddaten des Fahrzeugs (1) zu dem nicht-bewegten Objekt (4, 7, 8) und aus der Information über die Position des nicht-bewegten Objekts (4, 7, 8) die Position des Fahrzeugs (1) ermittelt wird.

3. Verfahren nach Anspruch 2, **dadurch gekennzeichnet, dass** aus den Positionen des Fahrzeugs (1) und des nicht-bewegten Objekts (4, 7, 8) sowie der relativen Bewegung des Fahrzeugs (1) zu dem nicht-bewegten Objekt (4, 7, 8) eine gerichtete Geschwindigkeit des Fahrzeugs (1) ermittelt wird.

4. Verfahren nach einem der vorhergehenden Ansprüche, **dadurch gekennzeichnet, dass** die Umfelddaten des Fahrzeuges (1) zu mehreren nicht-bewegten Objekten (4, 7, 8) ermittelt werden, dass die nicht-bewegten Objekte (4, 7, 8) eine Information über ihre Nicht-Bewegung aussenden, die von dem Fahrzeug (1) empfangen wird, und dass aus den verschiedenen Umfelddaten des Fahrzeugs (1) zu den mehreren nicht-bewegten Objekten die relative Bewegung des Fahrzeugs (1) zu den nicht-bewegten Objekten (4, 7, 8) und daraus die Geschwindigkeit des Fahrzeuges (1) ermittelt wird.

5. Verfahren nach Anspruch 4, **dadurch gekennzeichnet, dass** die nicht-bewegten Objekte (4, 7, 8) eine Information über ihre Position aussenden, die von dem Fahrzeug (1) empfangen wird, und dass aus den Umfelddaten des Fahrzeugs zu den nicht-bewegten Objekten (4, 7, 8) und aus den Informationen über die Position der nicht-bewegten Objekte die Position des Fahrzeugs ermittelt wird.

6. Verfahren nach einem der Ansprüche 4 oder 5, **dadurch gekennzeichnet, dass** die Ermittlung der Geschwindigkeit und/oder Position des Fahrzeugs (1) unter Verwendung statistischer Methoden erfolgt.

7. Verfahren nach einem der vorhergehenden Ansprüche, **dadurch gekennzeichnet, dass** die ermittelte Position und/oder Geschwindigkeit des Fahrzeugs (1) mit Positions- und Geschwindigkeitswerten aus fahrzeuginternen Sensoren fusioniert werden.

8. Verfahren nach einem der vorhergehenden Ansprüche, **dadurch gekennzeichnet, dass** als Umfeldsensor ein Radarsensor, ein Kamerasensor, ein Laserscanner, ein Lidar und/oder Ultraschallsensoren verwendet werden.

9. Vorrichtung zur Ermittlung der Geschwindigkeit und/oder der Position eines Fahrzeuges (1), wobei das Fahrzeug (1) mit einer Kommunikationseinheit zur Teilnahme an einer drahtlosen Fahrzeug-zu-Umgebung-Kommunikation, mit wenigstens einem Umfeldsensor, der Umfelddaten des Fahrzeuges (1) zu wenigstens einem nicht-bewegten Objekt (4, 7, 8) ermittelt, und mit einer Recheneinheit ausgestattet ist, **dadurch gekennzeichnet, dass** die Recheneinheit zur Durchführung des Verfahrens nach einem der Ansprüche 1 bis 8 eingerichtet ist.

## Claims

1. Method for determining the speed of a vehicle (1) equipped with at least one surround sensor that determines environment data of the vehicle (1) relative to at least one motionless object (4, 7, 8), wherein
the at least one motionless object (4, 7, 8) and the vehicle (1) participate in a wireless vehicle-to-environment communication, and at least the motionless object (4, 7, 8) transmits a piece of information about its motionlessness, which is received by the vehicle (1), and wherein the relative motion of the vehicle (1) with respect to the motionless object (4, 7, 8) is determined from the environment data of the vehicle (1) relating to the motionless object (4, 7, 8), and the speed of the vehicle (1) and/or the relative position of the vehicle (1) with respect to the motionless object (4, 7, 8) is determined from this relative motion.

2. Method according to Claim 1, **characterized in that**
the motionless object (4, 7, 8) transmits a piece of information about its position, which is received by the vehicle (1), and **in that** the position of the vehicle (1) is determined from the environment data of the vehicle (1) relating to the motionless object (4, 7, 8) and from the information about the position of the motionless object (4, 7, 8).

3. Method according to Claim 2, **characterized in that**
a velocity of the vehicle (1) is determined from the positions of the vehicle (1) and of the motionless object (4, 7, 8) and from the relative motion of the vehicle (1) with respect to the motionless object (4, 7, 8).

4. Method according to any of the previous claims, **characterized in that**
the environment data of the vehicle (1) is determined with respect to a plurality of motionless objects (4, 7, 8), **in that** the motionless objects (4, 7, 8) send a piece of information about their motionlessness, which is received by the vehicle (1), and **in that** the relative motion of the vehicle (1) with respect to the motionless objects (4, 7, 8) is determined from the various environment data of the vehicle (1) relating to the motionless objects, and the speed of the vehicle (1) is determined from this relative motion.

5. Method according to Claim 4, **characterized in that**
the motionless objects (4, 7, 8) transmit a piece of information about their position, which is received by the vehicle (1), and **in that** the position of the vehicle is determined from the environment data of the vehicle relating to the motionless objects (4, 7, 8) and from the information on the position of the motionless objects.

6. Method according to either of Claims 4 or 5, **characterized in that**
the speed and/or position of the vehicle (1) is determined using statistical methods.

7. Method according to any of the previous claims, **characterized in that**
the determined position and/or speed of the vehicle (1) can be fused with position and speed values from invehicle sensors.

8. Method according to any of the previous claims, **characterized in that** a radar sensor, a camera sensor, a laser scanner, a lidar and/or ultrasound sensors are used as the surround sensor.

9. Device for determining the speed and/or position of a vehicle (1), wherein the vehicle (1) is equipped with a communications unit for participating in a wireless vehicle-to-environment communication, with at least one surround sensor, which determines environment data of the vehicle (1) relating to at least one motionless object (4, 7, 8), and with a processing unit, **characterized in that** the processing unit is designed to execute the method according to any of Claims 1 to 8.

## Revendications

1. Procédé pour déterminer la vitesse d'un véhicule (1), lequel est équipé d'au moins un détecteur d'environnement qui détermine des données d'environnement du véhicule (1) par rapport à au moins un objet (4, 7, 8) non mobile, l'au moins un objet (4, 7, 8) et le véhicule (1) participant à une communication sans fil de véhicule à environnement et au moins l'objet (4, 7, 8) non mobile émettant une information à propos de sa non mobilité, laquelle est reçue par le véhicule (1), et le mouvement relatif du véhicule (1) par rapport à l'objet (4, 7, 8) non mobile et, de là, la vitesse du véhicule (1) et/ou la position relative du véhicule (1) par rapport à l'objet (4, 7, 8) non mobile étant déterminées à partir des données d'environnement du véhicule (1) par rapport à l'objet (4, 7, 8) non mobile.

2. Procédé selon la revendication 1, **caractérisé en ce que** l'objet (4, 7, 8) non mobile émet une information à propos de sa position, laquelle est réceptionnée par le véhicule (1), et **en ce que** la position du véhicule (1) est déterminée à partir des données d'environnement du véhicule (1) par rapport à l'objet (4, 7, 8) non mobile et à partir de l'information sur la position de l'objet (4, 7, 8) non mobile.

3. Procédé selon la revendication 2, **caractérisé en ce qu'**une vitesse directionnelle du véhicule (1) est déterminée à partir des positions du véhicule (1) et de l'objet (4, 7, 8) non mobile ainsi que du mouvement relatif du véhicule (1) par rapport à l'objet (4, 7, 8) non mobile.

4. Procédé selon l'une des revendications précédentes, **caractérisé en ce que** les données d'environnement du véhicule (1) par rapport à plusieurs objets (4, 7, 8) non mobiles sont déterminées, **en ce que** les objets (4, 7, 8) non mobiles émettent une information à propos de leur non mobilité, laquelle est reçue par le véhicule (1), et **en ce que** le mouvement relatif du véhicule (1) par rapport aux objets (4, 7, 8) non mobiles et, de là, la vitesse du véhicule (1) sont déterminées à partir des différentes données d'environnement du véhicule (1) par rapport aux plusieurs objets non mobiles.

5. Procédé selon la revendication 4, **caractérisé en ce que** les objets (4, 7, 8) non mobiles émettent une information à propos de leur position, laquelle est réceptionnée par le véhicule (1), et **en ce que** la position du véhicule est déterminée à partir des données d'environnement du véhicule par rapport aux objets (4, 7, 8) non mobiles et à partir des informations sur la position des objets non mobiles.

6. Procédé selon l'une des revendications 4 ou 5, **caractérisé en ce que** la détermination de la vitesse et/ou de la position du véhicule (1) est effectuée en employant des méthodes statistiques.

7. Procédé selon l'une des revendications précédentes, **caractérisé en ce que** la position et/ou la vitesse déterminées du véhicule (1) sont fusionnées avec des valeurs de position et de vitesse issues de détecteurs internes au véhicule.

8. Procédé selon l'une des revendications précédentes, **caractérisé en ce que** le détecteur d'environnement utilisé est un détecteur radar, un détecteur à caméra, un dispositif de balayage à laser, un lidar et/ou des détecteurs à ultrasons.

9. Dispositif pour déterminer la vitesse et/ou la position d'un véhicule (1), le véhicule (1) étant équipé d'une unité de communication en vue de participer à une communication sans fil de véhicule à environnement, d'au moins un détecteur d'environnement qui détermine des données d'environnement du véhicule (1) par rapport à au moins un objet (4, 7, 8) non mobile, et d'une unité de calcul, **caractérisé en ce que** l'unité de calcul est conçue pour mettre en oeuvre le procédé selon l'une des revendications 1 à 8.
